# EUROPÄISCHE PATENTSCHRIFT

(11) **EP 0 782 522 B1**
(45) Veröffentlichungstag und Bekanntmachung des Hinweises auf die Patenterteilung: **02.12.1998**
(21) Anmeldenummer: 95934067.0
(22) Anmeldetag: 18.09.1995
(51) Int. Cl.: B62D 5/083, B62D 6/02

(54) **DREHSCHIEBERVENTIL FÜR HILFSKRAFTLENKUNGEN VON KRAFTFAHRZEUGEN**
ROTARY SLIDE VALVE FOR POWER-ASSISTED STEERING IN MOTOR VEHICLES
SOUPAPE A TIROIR ROTATIF POUR DIRECTION ASSISTEE DE VEHICULE A MOTEUR

(30) Priorität: 21.09.1994 DE 4433599
(43) Veröffentlichungstag der Anmeldung: 09.07.1997
(73) Patentinhaber: ZF FRIEDRICHSHAFEN Aktiengesellschaft, 88038 Friedrichshafen (DE)
(72) Erfinder: BREITWEG, Werner, D-73529 Bargau (DE)
(86) Internationale Anmeldenummer: EP9503657
(87) Internationale Veröffentlichungsnummer: WO9609200

(56) Entgegenhaltungen:
- WO-A-94/00329
- DE-A- 3 934 468
- DE-A- 4 310 396

## Beschreibung

Die Erfindung betrifft ein Drehschieberventil für Hilfskraftlenkungen von Kraftfahrzeugen nach dem Oberbegriff des Anspruches 1. Das Drehschieberventil enthält zwei Ventilelemente, die koaxial ineinander beweglich angeordnet sind und maximal um den Verdrehweg einer Totgangkupplung relativ zueinander verdrehbar sind. Dabei ist das erste Ventilelement, das mit einem Ventil-Eingangsglied verbunden ist, als radial außenliegender Drehschieber ausgebildet. Das zweite Ventilelement ist mit einem Ventil-Ausgangsglied drehfest verbunden und ist als radial innenliegende Steuerbüchse ausgeführt, die in einer Axialbohrung des Drehschiebers geführt ist. Beide Ventilelemente weisen Steuer-Längsnuten auf, die wenigstens zu einem Teil in ihrer axialen Länge begrenzt sind und miteinander zusammenwirken zur Steuerung eines Druckmittels zu und von zwei Arbeitsräumen eines Servomotors. Zur Rückstellung der beiden Ventilelemente aus einer ausgelenkten Stellung in ihre Neutralstellung dient ein Torsionsstab.

Ein derartiges Drehschieberventil ist Gegenstand der DE-A1-43 10 396. Dieses Drehschieberventil weist den Vorteil auf, daß durch die besondere Anordnung der Steuerbüchse im Inneren des Drehschiebers die Außenabmessungen des gesamten Ventiles sehr klein gehalten werden können. Die Zentrierung erfolgt bei diesem Drehschieberventil nur über den Torsionsstab. Ein Torsionsstab hat bekanntermaßen die Eigenschaft, daß im eigentlichen Mittenbereich des Drehschieberventils die Rückstellung durch den Torsionsstab nur sehr klein ist.

Es wurde deshalb bei anderen Drehschieberventilen verschiedentlich vorgeschlagen, zusätzlich zu dem Torsionsstab eine Zentriereinrichtung vorzusehen, die insbesondere im direkten Mittenbereich des Drehschieberventils eine sehr genaue Zentrierung ermöglicht. Eine solche zusätzliche Zentriereinrichtung ist beispielsweise bekannt aus der DE-C1 42 01 311. Die zusätzliche Zentriereinrichtung benötigt bei dieser Ausführung in axialer Richtung zusätzlichen Bauraum. Diese Mittenzentrierung ist nach der Fertigung der Einzelteile nicht mehr einstellbar. Dadurch sind große Mittenzentrier- und Drehmomentunterschiede möglich. Da sich die Zentrierfeder einerseits an einem drehenden und andererseits an einem feststehenden Teil abstützt, entsteht eine Reibung, die die Feinfühligkeit des Drehschieberventils beeinflußt.

Der Erfindung liegt die Aufgabe zugrunde, das bekannte Drehschieberventil mit einer zusätzlichen Mittenzentrierung auszustatten, die einstellbar ist und die keine zusätzliche Reibung. zwischen den beiden Ventilelementen mit sich bringt.

Diese Aufgabe wird durch das im Anspruch 1 gekennzeichnete Drehschieberventil gelöst. Vorteilhafte Ausgestaltungen der Erfindung sind in den Unteransprüchen angegeben. Im Anspruch 8 ist ein Verfahren zum Montieren des erfindungsgemäßen Drehschieberventils angegeben.

Die Lösung erfolgt dadurch, daß bei dem gattungsbildenden Drehschieberventil zwischen dem Drehschieber und dem Ventil-Ausgangsglied eine federbelastete Zentriereinrichtung angeordnet ist, die zwei gegeneinander verdrehbare Teile enthält mit wenigstens einer zwischen den beiden Teilen liegenden Kugel. Dabei ist das eine Teil mit einem Rückwirkungskolben fest und mit dem Drehschieber unverdrehbar, jedoch axial verschiebbar verbunden. Das andere Teil ist mit dem Ventil-Ausgangsglied in einer vorbestimmten Stellung unverdrehbar und unverschiebbar verbunden. Die Kugel ist in Ausnehmungen der beiden Teile gehalten.

Durch die Anordnung der Zentriereinrichtung zwischen dem Drehschieber und dem Ventil-Ausgangsglied kann ein Teil der Zentriereinrichtung mit dem Ventil-Ausgangsglied in einer vorbestimmten Stellung festgelegt werden. Dadurch kann die Zentriereinrichtung in bezug auf die Zentrierlage und die Zentrierkraft noch nach der Herstellung der Einzelteile leicht eingestellt werden. Durch die Anordnung der Zentriereinrichtung zwischen dem außenliegenden Drehschieber und dem Ventil-Ausgangsglied ist es auch möglich, die auf den Rückwirkungskolben wirkende Feder an dem Drehschieber abzustützen. Da sich der Rückwirkungskolben zusammen mit dem Drehschieber dreht, besteht zwischen den beiden Anlagestellen der Feder keine Relativbewegung, so daß dort keine Reibung auftritt.

Das andere Teil der Zentriereinrichtung, das mit dem Ventil-Ausgangsglied verbunden ist, besteht zweckmäßigerweise aus einem einfach herzustellenden Ringstück, das an seiner einen Stirnfläche eine V-förmige Ausnehmung aufweist. Das Ringstück wird in der vorbestimmten Stellung gemeinsam mit dem Ventil-Ausgangsglied gebohrt und durch einen Stift mit diesem fest verbunden. Zur Vereinfachung der Montage und zur Sicherung der Lage während des Betriebs des Drehschieberventils ist die Kugel in einem Kunststoffkäfig gehalten. Die Feder, die sich einerseits an dem Rückwirkungskolben und andererseits an einem an dem Drehschieber angeordneten Anschlag, beispielsweise einem Sprengring, abstützt, wird zweckmäßigerweise als Formfeder in der Art einer Tellerfeder ausgebildet. Dadurch kann eine genau dosierte Zentrierkraft bei einer sehr kurzen Baulänge verwirklicht werden.

Im folgenden wird die Erfindung anhand eines in der Zeichnung dargestellten Ausführungsbeispieles näher erläutert. Es zeigen:

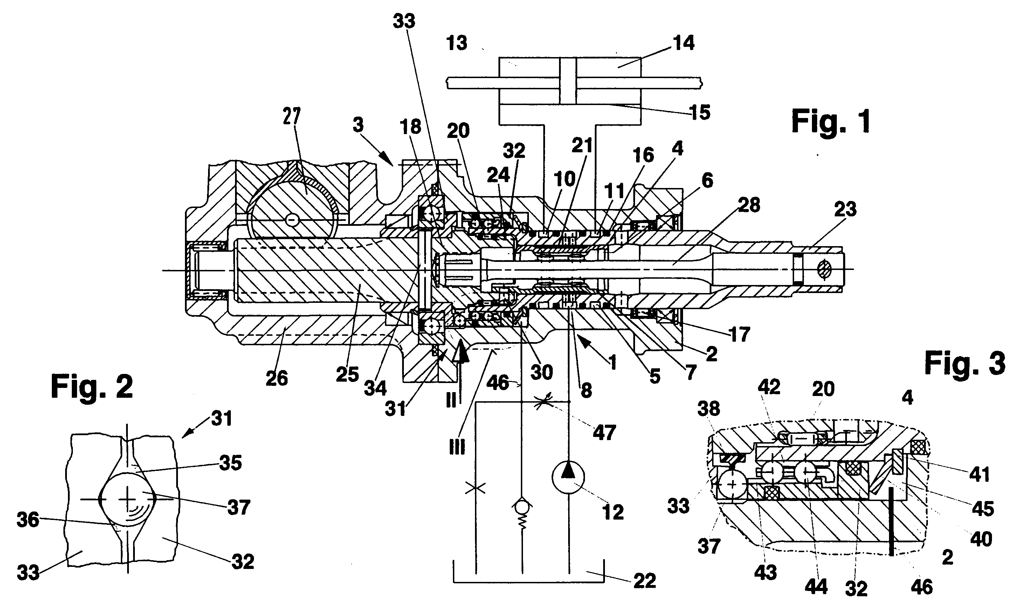

- Fig. 1: einen Längsschnitt durch das erfindungsgemäße Drehschieberventil mit einem schematisch dargestellten, zugehörigen Lenkgetriebe;
- Fig. 2: eine Draufsicht auf die Zentriereinrichtung gemäß dem Pfeil II in Fig. 1 und
- Fig. 3: die Einzelheit III aus Fig. 1 in vergrößertem Maßstab.

Ein Drehschieberventil 1 ist in einem Ventilgehäuse 2 einer Hilfskraftlenkung 3 enthalten.

Das Drehschieberventil 1 enthält ein erstes Ventilelement in der Form eines Drehschiebers 4, der in einer Ventilbohrung 5 des Ventilgehäuses 2 drehbar geführt ist. Der Drehschieber 4 weist eine Axialbohrung 6 auf, in der ein zweites Ventilelement in der Form einer Steuerbüchse 7 drehbar geführt ist. Der Drehschieber 4 liegt also radial außen, während die Steuerbüchse 7 radial innen liegt.

Der Drehschieber 4 weist an seiner äußeren Mantelfläche Ringnuten 8, 10, 11 auf, an die eine Servopumpe 12 bzw. zwei Arbeitsräume 13 und 14 eines Servomotors 15 angeschlossen sind. Die Ringnuten 8, 10, 11 sind durch Dichtringe 16 gegenüber der Ventilbohrung 5 abgedichtet. Der Drehschieber 4 ist in dem Ventilgehäuse 2 durch ein Wälzlager 17 und auf einem Ventil-Ausgangsglied 18 durch ein Wälzlager 20 gelagert. In seiner Axialbohrung 6 weist der Drehschieber 4 nicht dargestellte Steuer-Längsnuten auf, die in ihrer axialen Länge begrenzt sind und die zusammenwirken mit Steuer-Längsnuten 21, die an der äußeren Mantelfläche der Steuerbüchse 7 angeordnet sind. Ein Teil der Steuer-Längsnuten 21 ist nach beiden Enden der Steuerbüchse 7 hin abgeschlossen. Einige der Steuer-Längsnuten 21 sind nach einem Ende der Steuerbüchse 7 hin offen und stehen in Verbindung mit einem Druckmittelbehälter 22, aus dem die Servopumpe 12 Druckmittel ansaugt.

Der Drehschieber 4 ist drehfest mit einem Ventil-Eingangsglied 23 verbunden, das als Lenkspindelanschluß ausgebildet ist. Der Lenkspindelanschluß ist beispielsweise mit einer nicht dargestellten Lenkspindel über ein ebenfalls nicht dargestelltes Kreuzgelenk verbunden. Der Drehschieber 4 ist außerdem über eine Totgangkupplung 24 mit dem Ventil-Ausgangsglied 18 verbunden. Die Totgangkupplung 24 besteht beispielsweise aus einer Innenverzahnung am Drehschieber 4 und einer Außenverzahnung an dem Ventil-Ausgangsglied 18.
Das Ventil-Ausgangsglied 18 stellt gleichzeitig ein Eingangsglied für den mechanischen Teil der Hilfskraftlenkung 3 dar und ist beispielsweise mit einem Ritzel 25 verbunden. Das Ritzel 25 ist in einem Lenkgehäuse 26 drehbar gelagert und wirkt zusammen mit einer Zahnstange 27, die in dem Lenkgehäuse 26 axial verschiebbar geführt ist.
Der Drehschieber 4 ist außerdem über einen Torsionsstab 28 mit dem Ventil-Ausgangsglied 18 verbunden. Das Ventil-Ausgangsglied 18 seinerseits ist über einen Stift 30 drehfest mit der Steuerbüchse 7 verbunden, die an ihrem einen Ende in einer Axialbohrung des Ventil-Ausgangsgliedes 18 aufgenommen ist.

Durch diese unterschiedlichen Verbindungen ist eine begrenzte Verdrehung zwischen dem Drehschieber 4 und der Steuerbüchse 7 möglich. Durch diese Verdrehung zwischen den beiden Ventilelementen wird das von der Servopumpe 12 geförderte Druckmittel dem jeweiligen Arbeitsraum 13 bzw. 14 des Servomotors 15 zugeführt und von dem entsprechend anderen Arbeitsraum 14 bzw. 13 zurück zu dem Druckmittelbehälter 22 geleitet.

Zwischen dem Drehschieber 4 und dem Ventil-Ausgangsglied 18 ist eine Zentriereinrichtung 31 angeordnet, die zwei gegeneinander verdrehbare Teile enthält. Das eine Teil ist mit einem Rückwirkungskolben 32 fest verbunden oder mit diesem einteilig ausgebildet. Der Rückwirkungskolben 32 kann einteilig ausgebildet oder aus mehreren Einzelstücken zusammengesetzt sein. Das andere Teil der Zentriereinrichtung 31 ist als Ringstück 33 ausgebildet und mit dem Ventil-Ausgangsglied 18 unverdrehbar und unverschiebbar verbunden. Bei dem dargestellten Ausführungsbeispiel ist das Ringstück 33 an dem Ventil-Ausgangsglied 18 durch einen Stift 34 befestigt.

An den einander zugewandten Stirnflächen der beiden Teile der Zentriereinrichtung 31, d. h. an dem Rückwirkungskolben 32 und an dem Ringstück 33, ist jeweils wenigstens eine Ausnehmung 35 bzw. 36 mit V-förmig zueinander geneigten Schrägflächen ausgebildet. Zwischen den beiden Ausnehmungen 35 und 36 ist ein Wälzkörper, insbesondere eine Kugel 37, eingesetzt, der in einem Kunststoffkäfig 38 gehalten ist. Die beiden Teile der Zentriereinrichtung 31 werden durch eine Feder 40, die als Formfeder nach Art einer Tellerfeder ausgebildet ist, zusammengedrückt. Die Feder 40 wirkt auf den Rückwirkungskolben 32 und stützt sich an einem an dem Drehschieber 4 angeordneten Anschlag 41 ab. Der Anschlag 41 ist beispielsweise durch einen Sprengring gebildet.

Der Drehschieber 4 weist an seiner Außenumfangsfläche Längsrillen 42 und der Rückwirkungskolben 32 an seiner Innenumfangsfläche Längsrillen 43 auf, die zusammen mit zwischen den Längsrillen 42 und 43 liegenden Kugeln 44 eine Längsführung zwischen dem Drehschieber 4 und dem Rückwirkungskolben 32 bilden. Durch diese Längsführung ist der Rückwirkungskolben 32 mit dem Drehschieber 4 drehfest verbunden. Der Rückwirkungskolben 32 ist jedoch gegenüber dem Drehschieber 4 nahezu reibungsfrei in axialer Richtung verschiebbar.

Das bisher beschriebene, erfindungsgemäße Drehschieberventil kann auf einfache Art und Weise zusätzlich zu seiner mechanischen Zentrierung mit einer hydraulischen Rückwirkung versehen werden. Die hydraulische Rückwirkungskraft wird dadurch erzeugt, daß in einen Raum 45, der an den Rückwirkungskolben 32 angrenzt, und der die Feder 40 enthält, ein lenckraftabhängiger Servodruck über eine Leitung 46 eingespeist wird. Bei Bedarf kann dieser Servodruck in Abhängigkeit von der Fahrgeschwindigkeit verändert werden. Dies wird beispielsweise dadurch erreicht, daß das von der Servopumpe 12 geförderte Druckmittel über eine Drossel 47, die in Abhängigkeit von der Fahrgeschwindigkeit verstellbar ist, der Leitung 46 zugeführt wird. Bei niedriger Fahrgeschwindigkeit ist die Drossel 47 nahezu geschlossen, so daß in dem Raum 45 nur ein relativ niedriger Rückwirkungsdruck herrscht: Zum Verstellen des Drehschieberventils ist nur eine relativ niedrige Handkraft am Lenkhandrad erforderlich. Bei hoher Fahrgeschwindigkeit ist die Drossel 47 dagegen weit geöffnet, so daß der volle Servodruck in dem Raum 45 wirken kann. Diese erhöhte Rückwirkungskraft auf den Rückwirkungskolben 32 muß der Fahrer durch erhöhten Krafteinsatz am Lenkhandrad überwinden: Der Fahrer behält ein gutes "Lenkgefühl".

Wie bereits erwähnt, soll mit der vorliegenden Erfindung die Möglichkeit geschaffen werden, die Zentriereinrichtung hinsichtlich Zentrierkraft und exakter Mittenstellung leicht einstellbar auszugestalten. Die Zentriereinrichtung 31 wird mit folgendem Montageverfahren des Drehschieberventils 1 eingestellt: Zunächst werden der Drehschieber 4 und die Steuerbüchse 7 in der Stellung ihrer hydraulischen Mitte durch den Torsionsstab 28 fest miteinander verbunden. Danach werden die Feder 40 und der Rückwirkungskolben 32 auf den Drehschieber 4 geschoben, die in dem Kunststoffkäfig 38 gehaltene Kugel 37 wird in die V-förmige Ausnehmung 35 des Rückwirkungskolbens 32 eingesetzt. Danach wird das Ringstück 33 mit seiner V-förmigen Ausnehmung 36 zu der Kugel 37 ausgerichtet und mit einer vorbestimmten Kraft gegen die Feder 40 gedrückt. In dieser vorbestimmten Stellung, in der die Größe der Zentrierkraft und die mechanische Mittenstellung genau stimmen, wird das Ringstück 33 mit dem Ventil-Ausgangsglied 18 fest verbunden. Diese Verbindung erfolgt zweckmäßigerweise dadurch, daß das Ringstück 33 und das Ventil-Ausgangsglied 18 in der vorbestimmten Stellung gemeinsam gebohrt und durch den Stift 34 fest miteinander verbunden werden.

### Bezugszeichen

- 1: Drehschieberventil
- 2: Ventilgehäuse
- 3: Hilfskraftlenkung
- 4: Drehschieber
- 5: Ventilbohrung
- 6: Axialbohrung
- 7: Steuerbüchse
- 8: Ringnut
- 9: -
- 10: Ringnut
- 11: Ringnut
- 12: Servopumpe
- 13: Arbeitsraum
- 14: Arbeitsraum
- 15: Servomotor
- 16: Dichtring
- 17: Wälzlager
- 18: Ventil-Ausgangsglied
- 19: -
- 20: Wälzlager
- 21: Steuer-Längsnut
- 22: Druckmittelbehälter
- 23: Ventil-Eingangsglied
- 24: Totgangkupplung
- 25: Ritzel
- 26: Lenkgehäuse
- 27: Zahnstange
- 28: Torsionsstab
- 29: -
- 30: Stift
- 31: Zentriereinrichtung
- 32: Rückwirkungskolben
- 33: Ringstück
- 34: Stift
- 35: Ausnehmung
- 36: Ausnehmung
- 37: Kugel
- 38: Kunststoffkäfig
- 39: -
- 40: Feder
- 41: Anschlag
- 42: Längsrille
- 43: Längsrille
- 44: Kugel
- 45: Raum
- 46: Leitung
- 47: Drossel

## Patentansprüche

1. Drehschieberventil für Hilfskraftlenkungen von Kraft-fahrzeugen, mit einem ersten Ventilelement, das mit einem Ventil-Eingangsglied (23) drehfest verbunden ist, und mit einem zweiten Ventilelement, das mit einem Ventil-Ausgangsglied (18) drehfest verbunden ist,
- wobei das erste Ventilelement als radial außenliegender Drehschieber (4) eine Axialbohrung (6) aufweist und mit dem Ventil-Ausgangsglied (18) über einen Torsionsstab (30) und über eine Totgangkupplung (24) verbunden ist,
- wobei das zweite Ventilelement als radial innenliegende Steuerbüchse (7) in der Axialbohrung (6) des Drehschiebers (4) geführt ist,
- wobei die beiden Ventilelemente in einem Ventilgehäuse (2) koaxial ineinander beweglich angeordnet sind und maximal um den Verdrehweg der Totgangkupplung (24) relativ zueinander verdrehbar sind und
- wobei der Drehschieber (4) innenliegende und die Steuerbüchse (7) außenliegende, wenigstens teilweise in ihrer axialen Länge begrenzte Steuer-Längsnuten (21) aufweisen, die miteinander zusammenwirken zur Steuerung eines Druckmittels zu und von zwei Arbeitsräumen (13, 14) eines Servomotors (15),
- wobei zwischen dem Drehschieber (4) und dem Ventil-Ausgangsglied (18) eine Zentriereinrichtung angeordnet ist,
dadurch **gekennzeichnet,**
- daß die Zentriereinrichtung (31) zwei gegeneinander verdrehbare Teile enthält und wenigstens eine zwischen den beiden Teilen liegende Kugel (37),
- wobei das eine Teil mit einem Rückwirkungskolben (32) fest verbunden und mit dem Drehschieber (4) unverdrehbar, jedoch axial verschiebbar verbunden ist,
- wobei das andere Teil mit dem Ventil-Ausgangsglied (18) in einer vorbestimmten Stellung unverdrehbar und unverschiebbar verbunden ist und
- wobei die Kugel (37) in Ausnehmungen (35, 36) der beiden Teile gehalten ist und
- daß auf den Rückwirkungskolben (32) eine Feder (40) wirkt, die sich einerseits an dem Rückwirkungskolben (32) und andererseits an einem an dem Drehschieber (4) angeordneten Anschlag (41) abstützt.

2. Drehschieberventil nach Anspruch 1, dadurch **gekennzeichnet,** daß das andere Teil ein Ringstück (33) ist, das mit dem Ventil-Ausgangsglied (18) in der vorbestimmten Stellung fest verbunden ist.

3. Drehschieberventil nach Anspruch 2, dadurch **gekennzeichnet,** daß das Ringstück (33) mit dem Ventil-Ausgangsglied (18) verbunden ist.

4. Drehschieberventil nach Anspruch 2, dadurch **gekennzeichnet,** daß die Ausnehmungen (35, 36) der beiden Teile mit V-förmig zueinander geneigten Schrägflächen ausgeführt sind.

5. Drehschieberventil nach Anspruch 4, dadurch **gekennzeichnet,** daß die Kugel (37) in einem Kunststoffkäfig (38) gehalten ist.

6. Drehschieberventil nach Anspruch 1, dadurch **gekennzeichnet,** daß die Feder (40) als Formfeder in der Art einer Tellerfeder ausgebildet ist.

7. Drehschieberventil nach einem der Ansprüche 1 bis 6, dadurch **gekennzeichnet,** daß an der Außenumfangsfläche des Drehschiebers (4) und an der Innenumfangsfläche des Rückwirkungskolbens (32) Längsrillen (42, 43) angeordnet sind, die zusammen mit zwischen ihnen liegenden Kugeln (44) eine Längsführung zwischen dem Drehschieber (4) und dem Rückwirkungskolben (32) bilden.

8. Verfahren zum Montieren eines Drehschieberventils aus einem der Anprüche 1 bis 7, **gekennzeichnet** durch folgende Schritte:
- der Drehschieber (4) mit dem Ventil-Eingangsglied (23) und die Steuerbüchse (7) mit dem Ventil-Ausgangsglied (18) werden durch den Torsionsstab (28) in der Stellung ihrer hydraulischen Mitte fest miteinander verbunden;
- die Feder (40) und dann der Rückwirkungskolben (32) werden auf den Drehschieber (4) geschoben;
- danach wird die in dem Kunststoffkäfig (38) gehaltene Kugel (37) in die V-förmige Ausnehmung (35) des Rückwirkungskolbens (32) eingesetzt;
- das Ringstück (33) wird mit seiner V-förmigen Ausnehmung (36) zu der Kugel (37) ausgerichtet und mit einer vorbestimmten Kraft gegen die Feder (40) gedrückt;
- das Ringstück (33) und das Ventil-Ausgangsglied (18) werden in dieser vorbestimmten Stellung fest miteinander verbunden.

9. Verfahren zum Montieren des Drehschieberventils nach Anspruch 8, dadurch **gekennzeichnet,** daß das Ringstück (33) und das Ventil-Ausgangsglied (18) in der vorbestimmten Stellung gemeinsam gebohrt und durch einen Stift (34) fest miteinander verbunden werden.

## Claims

1. Rotary slide valve for power-assisted steering systems of motor vehicles, with a first valve element, which is non-rotatably connected to a valve inlet member (23), and with a second valve element, which is non-rotatably connected to a valve outlet member (18),
- wherein the first valve element, as a radially outer rotary slide (4), comprises an axial bore (6) and is connected to the valve outlet member (18) via a torsion bar (30) and a backlash coupling (24),
- wherein the second valve element, as a radially inner control bush (7), is guided in the axial bore (6) in the rotary slide (4),
- wherein the two valve elements are disposed in a valve housing (2) so that they can move coaxially in one another and can be rotated relative to one another at most by the rotational travel of the backlash coupling (24) and
- wherein the slide valve (4) comprises inner and the control bush (7) outer longitudinal control slots (21), at least some of which are limited in their axial length and which co-operate with one another to control a pressure medium to and from two working chambers (13, 14) of a servomotor (15),
- wherein a centring device is disposed between the rotary slide (4) and the valve outlet member (18),
characterised in
- that the centring device (31) comprises two parts which can rotate relative to one another and at least one ball (37) lying between the two parts,
- wherein one part is connected firmly to a reaction piston (32) and to the rotary slide (4) such that it cannot rotate, yet can be displaced axially,
- wherein the other part is connected to the valve outlet member (18) in a predetermined position such that it can neither rotate nor be displaced and
- wherein the ball (37) is held in recesses (35, 36) in both parts and
- that a spring (40) acts on the reaction piston (32), which spring is supported on one side at the reaction piston (32) and on the other at a stop (41) disposed at the rotary slide (4).

2. Rotary slide valve according to claim 1, characterised in that the other part is an annular piece (33) which is firmly connected to the valve outlet member (18) in the predetermined position.

3. Rotary slide valve according to claim 2, characterised in that the annular piece (33) is connected to the valve outlet member (18).

4. Rotary slide valve according to claim 2, characterised in that the recesses (35, 36) in both parts are constructed with slopes which are inclined towards one another in a V shape.

5. Rotary slide valve according to claim 4, characterised in that the ball (37) is held in a plastics cage (38).

6. Rotary slide valve according to claim 1, characterised in that the spring (40) is formed as a shaped spring in the manner of a Belleville spring.

7. Rotary slide valve according to one of claims 1 to 6, characterised in that longitudinal grooves (42, 43) are disposed at the outer circumferential surface of the rotary slide (4) and at the inner circumferential surface of the reaction piston (32), which grooves form, together with balls (44) lying between them, a longitudinal guide between the rotary slide (4) and the reaction piston (32).

8. Method for assembling a rotary slide valve from one of claims 1 to 7, characterised by the following steps:
- the rotary slide (4) with the valve inlet member (23) and the control bush (7) with the valve outlet member (18) are firmly connected together by the torsion bar (28) in the position of their hydraulic centre;
- the spring (40) and then the reaction piston (32) are pushed onto the rotary slide (4);
- the ball (37) held in the plastics cage (38) is subsequently inserted in the V-shaped recess (35) in the reaction piston (32);
- the annular piece (33) is aligned by way of its V-shaped recess (36) with the ball (37) and pushed towards the spring (40) with a predetermined force;
- the annular piece (33) and the valve outlet member (18) are firmly connected together in this predetermined position.

9. Method for assembling the rotary slide valve according to claim 8, characterised in that the annular piece (33) and the valve outlet member (18) are bored together in the predetermined position and firmly connected together by a pin (34).

## Revendications

1. Soupape à tiroir rotatif pour les directions assistées de véhicules automobiles comportant un premier élément de soupape coupé de façon non rotative à un élément d'entrée (23) et un deuxième élément de soupape coupé de façon non rotative à un élément de sortie (18),
- dans laquelle le premier élément de soupape en tant que tiroir rotatif (4) en position radiale externe présente un alésage axial (6) et est relié par l'intermédiaire d'une barre de torsion (30) et d'un embrayage de mouvement à vide (24) à l'élément de sortie (18),
- dans laquelle le deuxième élément de soupape est guidé en tant que douille de commande (7) dans l'alésage axial (6) du tiroir rotatif (4),
- dans laquelle les deux éléments de soupape sont disposés dans une cage de soupape (2) de façon à être coaxialement mobiles et à pouvoir tourner l'un par rapport à l'autre au maximum de la course de rotation de l'embrayage de mouvement à vide (24),
- dans laquelle le tiroir rotatif (4) présente des rainures de guidage longitudinales internes et la douille de commande (7) des rainures de guidage longitudinales externes (21) limitées au moins partiellement dans leur longueur axiale, agissant ensemble pour conduire un fluide sous pression dans les sens aller et retour entre deux chambres de travail (13, 14) d'un servomoteur (15),
- dans laquelle entre le tiroir rotatif (4) et l'élément de sortie (18) est agencé un dispositif de centrage,
**caractérisé** en ce que
- le dispositif de centrage (31) comporte deux pièces pouvant tourner l'une par rapport à l'autre et au moins une bille (37) située entre les deux pièces,
- dans laquelle l'une des pièces est reliée fermement à un piston à rétroaction (32) d'une part, et d'autre part, au tiroir rotatif (4) sans pouvoir tourner, mais mobile axialement,
- dans laquelle l'autre des pièces est reliée dans une position prédéfinie à l'élément de sortie (18) sans pouvoir tourner ni coulisser,
- dans laquelle la bille (37) est maintenue dans des évidements (35, 36) des deux pièces, et
- en ce qu'un ressort (40) agit sur le piston à rétroaction (32), ce ressort s'appuyant d'une part sur le piston à rétroaction (32) et d'autre part sur une butée (41) agencée sur le tiroir rotatif (4).

2. Soupape à tiroir rotatif selon la revendication 1, **caractérisée** en ce que l'autre pièce est une pièce annulaire (33) reliée fermement à l'élément de sortie (18) dans la position prédéfinie.

3. Soupape à tiroir rotatif selon la revendication 2, **caractérisée** en ce que la pièce annulaire (33) est reliée à l'élément de sortie (18).

4. Soupape à tiroir rotatif selon la revendication 2, **caractérisée** en ce que les évidements (35, 36) des deux pièces sont réalisés de façon à présenter des surfaces obliques inclinées l'une vers l'autre en forme de V.

5. Soupape à tiroir rotatif selon la revendication 4, **caractérisée** en ce que la bille (37) est maintenue dans une cage en matière plastique (38).

6. Soupape à tiroir rotatif selon la revendication 1, caractérisée en ce que le ressort (40) est réalisée comme un ressort façonné du type d'un ressort à disques.

7. Soupape à tiroir rotatif selon l'une des revendications 1 à 6, **caractérisée** en ce que sur la face circonférentielle externe du tiroir rotatif (4) et sur la surface circonférentielle interne du piston à rétroaction (32) sont agencées des rainures longitudinales (42, 43) qui forment ensemble avec des billes (44) se trouvant entre les rainures, un guidage longitudinal entre le tiroir rotatif (4) et le piston à rétroaction (32).

8. Procédé de montage d'une soupape à tiroir rotatif selon l'une des revendications 1 à 7, **caractérisé** en ce qu'il comporte les étapes suivantes :
- le tiroir rotatif (4) avec l'élément d'entrée (23) et la douille de guidage (7) avec l'élément de sortie (18) sont reliés fermement par la barre de torsion (28) dans la position de leur centre hydraulique;
- le ressort (40) et ensuite le piston à rétroaction (32) sont glissés sur le tiroir rotatif (4);
- ensuite, la bille (37) maintenue dans la cage en matière plastique (38) est insérée dans l'évidement en forme de V (35) du piston à rétroaction (32);
- la pièce annulaire (33) est alignée par son évidement en forme de V (36) par rapport à la bille (37) et poussée avec une force prédéfinie contre le ressort (40);
- la pièce annulaire (33) et l'élément de sortie (18) sont réunis fermement dans cette position prédéfinie.

9. Procédé de montage de la soupape à tiroir rotatif selon la revendication 9, **caractérisé** en ce que la pièce annulaire (33) et l'élément de sortie (18) sont percés ensemble dans la position prèdéfinie et réunis fermement par une goupille (34).
